# EUROPEAN PATENT SPECIFICATION

(11) **EP 1 665 058 B1**
(45) Date of publication and mention of the grant of the patent: **14.03.2012**
(21) Application number: 04780366.3
(22) Date of filing: 06.08.2004
(51) Int. Cl.: G06F 13/12, G06F 13/38

(54) **MEMORY MODULE AND METHOD HAVING ON-BOARD DATA SEARCH CAPABILITES AND PROCESSOR-BASED SYSTEM USING SUCH MEMORY MODULES**
SPEICHERMODUL UND VERFAHREN MIT ON-BOARD-DATASUCHFÄHIGKEITEN UND PROZESSORGESTÜTZTES SYSTEM MIT SOLCHEN SPEICHERMODULEN
MODULE DE MEMOIRE ET PROCEDE AVEC CAPACITE INTEGREE DE RECHERCHE DE DONNEES ET SYSTEME A BASE DE PROCESSEURS UTILISANT DE TELS MODULES DE MEMOIRE

(30) Priority: 28.08.2003 US 651801
(43) Date of publication of application: 07.06.2006
(73) Proprietor: Micron Technology, Inc., Boise, ID 83716-9632 (US); JEDDELOH, Joseph M., Shoreview, MN 55126 (US)
(72) Inventor: JEDDELOH, Joseph, M., Shoreview, Minnesota 55126 (US)
(74) Representative: Klunker . Schmitt-Nilson . Hirsch
(86) International application number: PCT/US2004/025523
(87) International publication number: WO 2005/024561

(56) References cited:
- WO-A-99/26139
- US-A- 5 893 089
- US-A- 6 011 741
- US-A1- 2003 235 099
- US-B1- 6 286 083
- US-B1- 6 477 592
- US-B1- 6 785 780

## Description

### TECHNICAL FIELD

The present invention relates to a memory devices, and more particularly, to memory modules containing memory devices and having the capability within the memory modules to search data stored in the memory devices.

### BACKGROUND OF THE INVENTION

Processor-based systems, such as computer systems, use memory devices, such as dynamic random access memory ("DRAM") devices, to store instructions and data that are accessed by a processor. These memory devices are typically used as system memory in a computer system. In a typical computer system, the processor communicates with the system memory through a memory controller. The processor issues a memory request, which includes a memory command, such as a read command, and an address designating the location from which data or instructions are to be read. The memory controller uses the command and address to generate appropriate command signals as well as row and column addresses, which are applied to the system memory. In response to the commands and addresses, data are transferred between the system memory and the processor. The memory controller is often part of a system controller, which also includes bus bridge circuitry for coupling the processor bus to an expansion bus, such as a PCI bus.

Although the operating speed of memory devices has continuously increased, this increase in operating speed has not kept pace with increases in the operating speed of processors. The increase in operating speed of memory controllers has also lagged behind the rapid increases in the operating speed of processors. The relatively slow speed of memory controllers and memory devices often limits the speed at which computer systems can function.

The operating speed of computer systems is also limited by latency problems that increase the time required to read data from system memory devices. More specifically, when a memory device read command is coupled to a system memory device, such as a synchronous DRAM ("SDRAM") device, the read data are output from the SDRAM device only after a delay of several clock periods. Therefore, although SDRAM devices can synchronously output burst data at a high data rate, the delay in initially providing the data can significantly slow the operating speed of a computer system using such SDRAM devices.

The adverse affect of the above-described problems on the operation of processor-based systems using such memory devices depends to a large extent on the nature of the operations being performed by the system. For operations that are highly memory intensive, *ie.*, frequent read and write operations, the above-described problems can be very detrimental to the operating speed of processor-based systems. For example, the speed at which a processor-based system, such as a computer system, can perform a "data mining" operation is largely a function of the speed at which a processor can access data, which is typically stored in system memory during such operations. In a data mining operation, the processor looks for specific data content, such as a specific number or word, stored in system memory. The processor performs this function by repetitively fetching items of data, and then comparing each fetched data item to the data content that is the subject of the search. Each time a data item is fetched, the processor must output a read memory command and a memory address, both of which must be coupled to the system memory. The processor must then wait until system memory device has output the read data and coupled the read data to the processor. As a result of the significant latency of system memory devices, which are typically dynamic random access ("DRAM") devices, it can take several clock cycles for the system memory to respond to the read memory command and address and output the read data item to the processor. When a large amount of data must be searched, data mining can require a considerable period of time.

One approach to increasing the operating speed of memory devices to provide faster memory intensive operations like data mining is to use multiple memory devices coupled to the processor through a memory hub. In a memory hub architecture, a system controller or memory hub controller is coupled to several memory modules, each of which includes a memory hub coupled to several memory devices. The memory hub efficiently routes memory requests and responses between the controller and the memory devices. Computer systems employing this architecture can have a higher data bandwidth because a processor can access one memory device while another memory device is responding to a prior memory access. For example, the processor can issue a read data request to one of the memory devices in the system while another memory device in the system is preparing to provide read data to the processor. The operating efficiency of computer systems using a memory hub architecture allow them to perform memory intensive operations like data mining significantly faster than systems in which the processor accesses each of several memory devices.

Although a memory hub architecture allows a processor to more rapidly access system memory devices when performing memory intensive operations such as data mining, memory hub architectures do not eliminate the problems inherent in repetitive data fetch operations. As a result, memory intensive operations like data mining can still require a considerable period of time even when a computer system uses system memory having a memory hub architecture.

There is therefore a need for a system and method that allows a processor to perform data mining at a significantly faster rate by avoiding the need for a large number of repetitive memory read operations.
US Patent No. 5,893,089 discloses a memory chip having an on-board search engine adapted to accept programming from a system CPU and to perform a search for a search object or pattern independently of further action by the CPU.

### SUMMARY OF THE INVENTION

Above discussed problem is solved by a memory hub as claimed in claim 1 and a method of searching for items of search data stored in a memory device as claimed in claim 21.

It is also disclosed a memory module including a memory device and a memory hub. The memory hub includes link interface and a data mining module coupled to both the link interface and the memory device. The data mining module is operable to receive at least one item of search data through the link interface. The data mining module then repetitively couples read memory requests to the memory devices, and the memory devices respond by outputting read data to the data mining module. The data mining module then compares the read data to the search data to determine if there is a data match. In the event of a data match, a data match indication is coupled from the memory module, either as the data match occurs or after being stored in a results memory.

### BRIEF DESCRIPTION OF THE DRAWINGS

Figure 1 is a block diagram of a computer system having memory modules in a memory hub architecture in which embodiments of the present invention can be implemented.

Figure 2 is a block diagram of a memory hub according to an embodiment of the present invention for use with the memory modules that may be used in the computer system of Figure 1 or in other processor-based systems.

Figure 3 is a block diagram of one embodiment of a data mining module used in the memory hub of Figure 2.

Figure 4 is a block diagram of a memory hub according to another embodiment of the present invention for use with the memory modules that may be used in the computer system of Figure 1 or in other processor-based systems.

### DETAILED DESCRIPTION OF PREFERRED EMBODIMENTS

Embodiments of the present invention are directed to a memory hub module having the capability of internally performing data mining operations. Certain details are set forth below to provide a sufficient understanding of various embodiments of the invention. However, it will be clear to one skilled in the art that the invention may be practiced without these particular details. In other instances, well-known circuits, control signals, and timing protocols have not been shown in detail in order to avoid unnecessarily obscuring the invention.

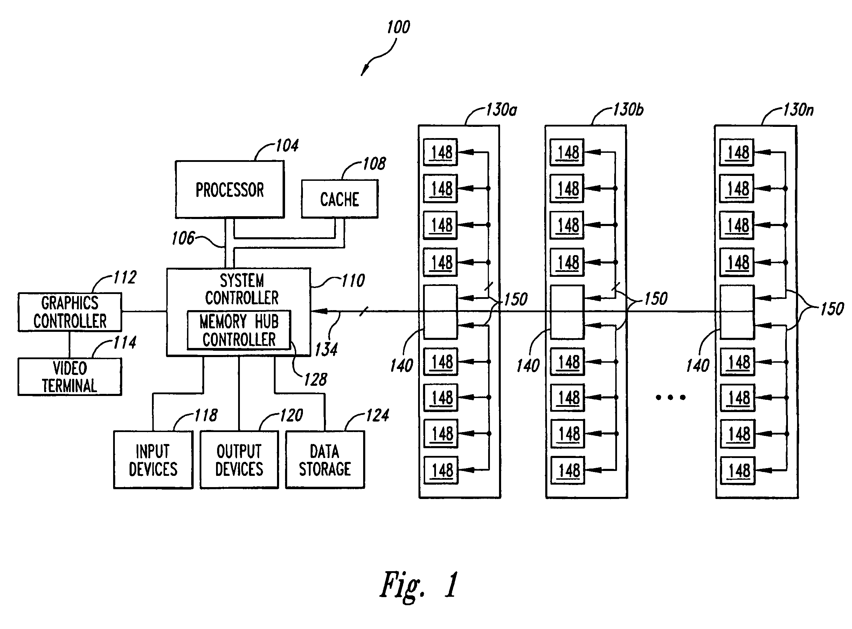

A computer system 100 according to one embodiment of the invention is shown in Figure 1. The computer system 100 includes a processor 104 for performing various computing functions, such as executing specific software to perform specific calculations or tasks. The processor 104 includes a processor bus 106 that normally includes an address bus, a control bus, and a data bus. The processor bus 106 is typically coupled to cache memory 108, which, is typically static random access memory ("SRAM"). Finally, the processor bus 106 is coupled to a system controller 110, which is also sometimes referred to as a bus bridge.

The system controller 110 serves as a communications path to the processor 104 for a variety of other components. More specifically, the system controller 110 includes a graphics port that is typically coupled to a graphics controller 112, which is, in turn, coupled to a video terminal 114. The system controller 110 is also coupled to one or more input devices 118, such as a keyboard or a mouse, to allow an operator to interface with the computer system 100. Typically, the computer system 100 also includes one or more output devices 120, such as a printer, coupled to the processor 104 through the system controller 110. One or more data storage devices 124 are also typically coupled to the processor 104 through the system controller 110 to allow the processor 104 to store data or retrieve data from internal or external storage media (not shown). Examples of typical storage devices 124 include hard and floppy disks, tape cassettes, and compact disk read-only memories (CD-ROMs).

The system controller 110 includes a memory hub controller 128 that is coupled to several memory modules 130a,b...n, which serve as system memory for the computer system 100. The memory modules 130 are preferably coupled to the memory hub controller 128 through a high-speed link 134, which may be an optical or electrical communication path or some other type of communications path. In the event the high-speed link 134 is implemented as an optical communication path, the optical communication path may be in the form of one or more optical fibers. In such case, the memory hub controller 128 and the memory modules will include an optical input/output port or separate input and output ports coupled to the optical communication path. The memory modules 130 are shown coupled to the memory hub controller 128 in a multi-drop arrangement in which the single high-speed link 134 is coupled to all of the memory modules 130. However, it will be understood that other topologies may also be used. For example, a point-to-point coupling arrangement may be used in which a separate high-speed link (not shown) is used to couple each of the memory modules 130 to the memory hub controller 128. A switching topology may also be used in which the memory hub controller 128 is selectively coupled to each of the memory modules 130 through a switch (not shown). Other topologies that may be used will be apparent to one skilled in the art.

Each of the memory modules 130 includes a memory hub 140 for controlling access to eight memory devices 148, which, in the example illustrated in Figure 1, are synchronous dynamic random access memory ("SDRAM") devices. However, a fewer or greater number of memory devices 148 may be used, and memory devices other than SDRAM devices may also be used. The memory hub 140 is coupled to each of the system memory devices 148 through a bus system 150, which normally includes a control bus, an address bus, and a data bus. However, other bus systems, such as a bus system using a shared command/address bus, may also be used

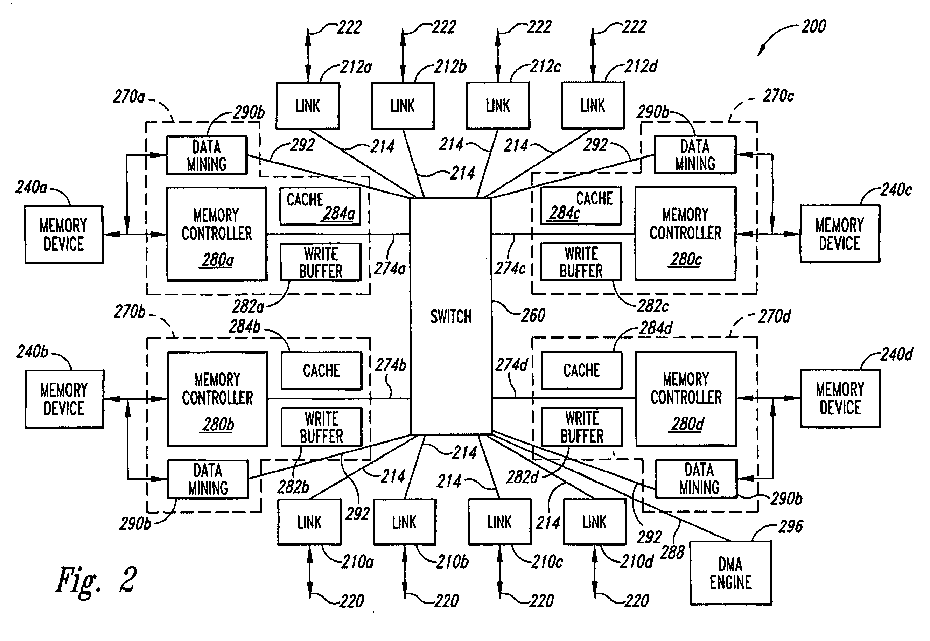

Figure 2 shows a memory hub 200 according to one embodiment of the present invention, which can be used as the memory hub 140 of Figure 1. The memory hub 200 is shown coupled to four memory devices 240a-d, which, in the present example are conventional SDRAM devices. In an alternative embodiment, the memory hub 200 is coupled to four different banks of memory devices, rather than merely four different memory devices 240a-d, with each bank typically having a plurality of memory devices. However, for the purpose of providing an example, the memory hub 200 is shown coupled to four memory devices 240a-d. It will be appreciated that the necessary modifications to the memory hub 200 a greater or lesser number of memory devices or to accommodate multiple banks of memory is within the knowledge of those ordinarily skilled in the art.

Further included in the memory hub 200 are link interfaces 210a-d, which may be used to couple the memory hub 200 to respective processors or other memory access devices. In the embodiment shown in Figure 1, only one memory access device, and hence only on link interface 210a, is used. The memory hub 200 also includes link interfaces 212a-d for coupling the memory module on which the memory hub 200 is located to other memory modules (not shown). These link interfaces 212a-d are not used in the embodiment of Figure 1. In any case, the link interfaces 210a-d and 212a-d are preferably coupled to a first high speed data link 220 and a second high speed data link 222, respectively. As previously discussed with respect to Figure 1, the high speed data links 220, 222 can be implemented using an optical or electrical communication path or some other type of communication path. The link interfaces 210a-d, 212a-d are conventional, and include circuitry used for transferring data, command, and address information to and from the high speed data links 220, 222. As well known, such circuitry includes transmitter and receiver logic known in the art. It will be appreciated that those ordinarily skilled in the art have sufficient understanding to modify the link interfaces 210a-d, 212a-d to be used with specific types of communication paths, and that such modifications to the link interfaces 210a-d 212a-d can be made without departing from the scope of the present invention as claimed. For example, in the event the high-speed data link 220, 222 is implemented using an optical communications path, the link interfaces 210a-d, 212a-d will include an optical input/output port that can convert optical signals coupled through the optical communications path into electrical signals.

The link interfaces 210a-d, 212a-d include circuitry that allow the memory hub 140 to be connected in the system memory in a variety of configurations. For example, the multi-drop arrangement, as shown in Figure 1, can be implemented by coupling each memory module to the memory hub controller 128 through either the link interfaces 210a-d or 212a-d. Alternatively, a point-to-point or daisy chain configuration can be implemented by coupling the memory modules in series. For example, the link interfaces 210a-d can be used to couple a first memory module and the link interfaces 212a-d can be used to couple a second memory module. The memory module coupled to a processor, or system controller, will be coupled thereto through one set of the link interfaces and further coupled to another memory module through the other set of link interfaces. In one embodiment of the present invention, the memory hub 200 of a memory module is coupled to the processor in a point-to-point arrangement in which there are no other devices coupled to the connection between the processor 104 and the memory hub 200. This type of interconnection provides better signal coupling between the processor 104 and the memory hub 200 for several reasons, including relatively low capacitance, relatively few line discontinuities to reflect signals and relatively short signal paths.

The link interfaces 210a-d, 212a-d are coupled to a switch 260 through a plurality of bus and signal lines, represented by busses 214. The busses 214 are conventional, and include a write data bus and a read data bus, although a single bi-directional data bus may alternatively be provided to couple data in both directions through the link interfaces 210a-d, 212a-d. It will be appreciated by those ordinarily skilled in the art that the busses 214 are provided by way of example, and that the busses 214 may include fewer or greater signal lines, such as further including a request line and a snoop line, which can be used for maintaining cache coherency.

The switch 260 is further coupled to four memory interfaces 270a-d which are, in turn, coupled to the memory devices 240a-d, respectively. By providing a separate and independent memory interface 270a-d for each memory device 240a-d, respectively, the memory hub 200 avoids bus or memory bank conflicts that typically occur with single channel memory architectures. The switch 260 is coupled to each memory interface through a plurality of bus and signal lines, represented by busses 274. The busses 274 include a write data bus, a read data bus, and a request line. However, it will be understood that a single bi-directional data bus or some other type of bus system may alternatively be used instead of a separate write data bus and read data bus. Moreover, the busses 274 can include a greater or lesser number of signal lines than those previously described.

In an embodiment of the present invention, each memory interface 270a-d is specially adapted to the memory devices 240a-d to which it is coupled. More specifically, each memory interface 270a-d is specially adapted to provide and receive the specific signals received and generated, respectively, by the memory device 240a-d to which it is coupled. Also, the memory interfaces 270a-d are capable of operating with memory devices 240a-d operating at different clock frequencies. As a result, the memory interfaces 270a-d isolate the processor 104 from changes that may occur at the interface between the memory hub 230 and memory devices 240a-d coupled to the memory hub 200, and it provides a more controlled environment to which the memory devices 240a-d may interface.

The switch 260 coupling the link interfaces 210a-d, 212a-d and the memory interfaces 270a-d can be any of a variety of conventional or hereinafter developed switches. For example, the switch 260 may be a cross-bar switch that can simultaneously couple link interfaces 210a-d, 212a-d and the memory interfaces 270a-d to each other in a variety of arrangements. The switch 260 can also be a set of multiplexers that do not provide the same level of connectivity as a cross-bar switch but nevertheless can couple the some or all of the link interfaces 210a-d, 212a-d to each of the memory interfaces 270a-d. The switch 260 may also includes arbitration logic (not shown) to determine which memory accesses should receive priority over other memory accesses. Bus arbitration performing this function is well known to one skilled in the art.

With further reference to Figure 2, each of the memory interfaces 270a-d includes a respective memory controller 280, a respective write buffer 282, a respective cache memory unit 284, and a respective data mining module 290. The memory controller 280 performs the same functions as a conventional memory controller by providing control, address and data signals to the memory device 240a-d to which it is coupled and receiving data signals from the memory device 240a-d to which it is coupled. However, the nature of the signals sent and received by the memory controller 280 will correspond to the nature of the signals that the memory devices 240a-d are adapted to send and receive. The cache memory unit 284 includes the normal components of a cache memory, including a tag memory, a data memory, a comparator, and the like, as is well known in the art. The memory devices used in the write buffer 282 and the cache memory unit 284 may be either DRAM devices, static random access memory ("SRAM") devices, other types of memory devices, or a combination of all three. Furthermore, any or all of these memory devices as well as the other components used in the cache memory unit 284 may be either embedded or stand-alone devices.

The write buffer 282 in each memory interface 270a-d is used to store write requests while a read request is being serviced. In such a system, the processor 104 can issue a write request to a system memory device 240a-d even if the memory device to which the write request is directed is busy servicing a prior write or read request. The write buffer 282 preferably accumulates several write requests received from the switch 260, which may be interspersed with read requests, and subsequently applies them to each of the memory devices 240a-d in sequence without any intervening read requests. By pipelining the write requests in this manner, they can be more efficiently processed since delays inherent in read/write turnarounds are avoided. The ability to buffer write requests to allow a read request to be serviced can also greatly reduce memory read latency since read requests can be given first priority regardless of their chronological order.

The use of the cache memory unit 284 in each memory interface 270a-d allows the processor 104 to receive data responsive to a read command directed to a respective system memory device 240a-d without waiting for the memory device 240a-d to provide such data in the event that the data was recently read from or written to that memory device 240a-d. The cache memory unit 284 thus reduces the read latency of the system memory devices 240a-d to maximize the memory bandwidth of the computer system. Similarly, the processor 104 can store write data in the cache memory unit 284 and then perform other functions while the memory controller 280 in the same memory interface 270a-d transfers the write data from the cache memory unit 284 to the system memory device 240a-d to which it is coupled.

The data mining module 290 is coupled to the switch 260 through a bus 292 and to a respective one of the memory devices 240a-d. The data mining module 290 receives data that is to searched in the respective memory device 240a-d. The search data are coupled from a processor or other memory access device (not shown in Figure 2) to the data mining module 290 through a respective link interface 210a-d and the switch 260. The search data coupled to the data mining module 290 may be either a single item of data, such as a word or a number, or several different items of data. The data mining module 290 causes items of read data to be repetitively read from its respective memory device 240a-d, and it then compares each item of read data to the search data, and couples the results of each positive comparison to the processor or other memory access device through the switch 260 and link interface 210a-d. Alternatively, the results of several positive comparisons may be saved in a storage device. For example, the results data for several items of search data may be transferred after all of the data in the respective memory device 240a-d have been searched. The saved results data are then transferred to the processor or other memory access device at the same time. The results data that are transferred from the data mining module 290 are preferably the address where the positively compared read data were stored in the respective memory device 240a-d. However, if multiple data items have been searched, the results data preferably includes data indicating which item of search has been found. For example, each of several items of results data may include the item of search data that was found paired with the address in the memory device 240a-d where that item of search data was found.

Further included in the memory hub 200 may be a direct memory access ("DMA") engine 296 coupled to the switch 260 through a bus 298. The DMA engine 296 enables the memory hub 200 to move blocks of data from one location in the system memory to another location in the system memory without intervention from the processor 104. The bus 298 includes a plurality of conventional bus lines and signal lines, such as address, control, data busses, and the like, for handling data transfers in the system memory. Conventional DMA operations well known by those ordinarily skilled in the art can be implemented by the DMA engine 296. The DMA engine 296 is able to read a link list in the system memory to execute the DMA memory operations without processor intervention, thus, freeing the processor 104 and the bandwidth limited system bus from executing the memory operations. The DMA engine 296 can also include circuitry to accommodate DMA operations on multiple channels, for example, for each of the system memory devices 240a-d. Such multiple channel DMA engines are well known in the art and can be implemented using conventional technologies.

Although the data mining modules 290a-d are shown in Figure 2 as being coupled directly to the respective memory devices 240a-d, other arrangements may be used. For example, the data mining modules 290a-d may be coupled to the respective memory controllers 280a-d so that the read requests are issued by the memory controllers 280a-d, and the resulting read data are either coupled directly to the data mining modules 290a-d or coupled through the memory controllers 280a-d.

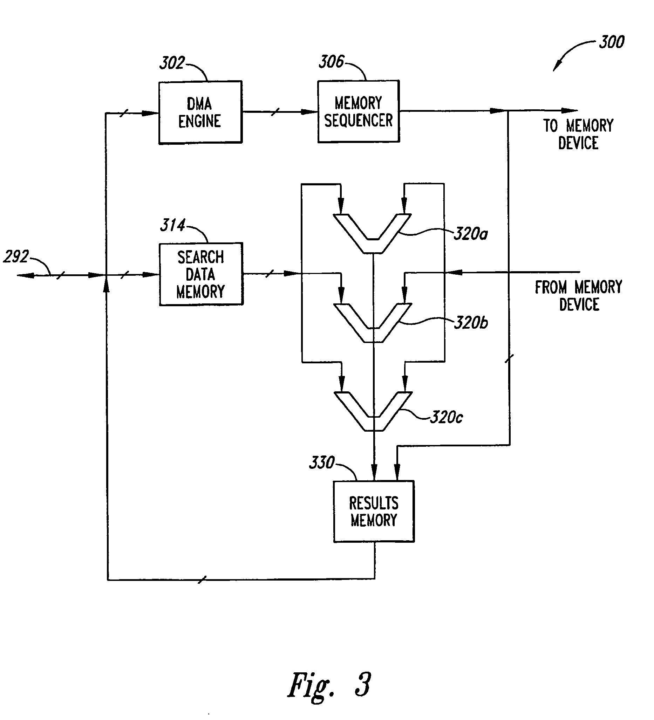

One embodiment of a data mining module 300 that can be used as the data mining module 290 of Figure 2 is shown in Figure 3. The data mining module 300 includes a DMA engine 302 that operates much like the DMA engine 296 in the memory module 200 (Figure 2) to transfer data to and from the memory devices 240a-d without using a processor. The DMA engine 302 is coupled to the bus 292 and is preferably configured by a processor or other memory access device (not shown in Figure 3) through one of the link interfaces 210a-d and the switch 260. For example, the DMA engine 302 may receive information specifying a range of memory addresses that are to be searched. The DMA engine 302 then couples signals to a memory sequencer 306 that causes the memory sequencer 306 to generate properly timed signals memory command and address signals for a series of sequentially conducted read operations. Alternatively, the DMA engine 302 may apply signals to the respective memory controller 280, and the memory controller 280 generates the command and address signals for a series of sequentially conducted read operations.

Regardless of how the command and address signals for read operations are generated, each read operations results in an item of read data being returned to the data mining module 300. However, before commencing the read operations, one or more items of search data are coupled from a processor or other memory access devices (not shown in Figure 3) and stored in a search data memory 314. The search data memory 314 then continuously outputs the search data to one or more comparators 320. The number of comparators 320 included in the data mining module 300 preferably corresponds to the number of items of search data stored in the search data memory 314. In the data mining module shown in Figure 3, the search data memory 314 stores three items of search data, so there are three comparators 320a-c each of which receives a respective one of the search data items stores in the search data memory 314. However, as previously mentioned, the number of search data items stored in the search data memory 314 and the number of comparators 320 provided may vary as desired. Also, a single comparator 320 could be used even though several items of search data were stored in the memory 314. In such case, the search data memory 314 would sequentially couple each item of search data to the single comparator 320, and a search for that data item would be conducted. However, this approach which is not falling within the scope of the claims is less desirable because it would be necessary to repetitively read all of the data stored in the memory device 240 each time a new data item was searched.

Each item of read data received from the respective memory device 240a-d is passed to all of the comparators 320a-c. Each comparator 320a-c then compares the item of read data to its respective search data item and outputs a hit indication if there is a match. In the data mining module 300 embodiment shown in Figure 3, each hit indication includes information identifying the item of search data for which there was a hit. The hit indication is coupled to a results memory 330, which may be a static random access memory ("SRAM") device. The results memory 330 is also coupled to the DRAM sequencer 306 to receive the address passed to the respective memory device 240a-d. The results memory 330 then stores both the information identifying the item of search data and the address of the read data for which there was a hit. Alternatively, where the processor or other memory access device is capable of identifying the read data stored at each address in memory, it may be unnecessary for the results memory 330 to store the information identifying the item of search data for which there was a hit.

When all of the addresses in the address space of the respective memory device 240a-d have been searched, the results memory outputs its contents to the processor or other memory access device through the bus 292, which is coupled to one of the link interfaces 210a-d through the switch 260.

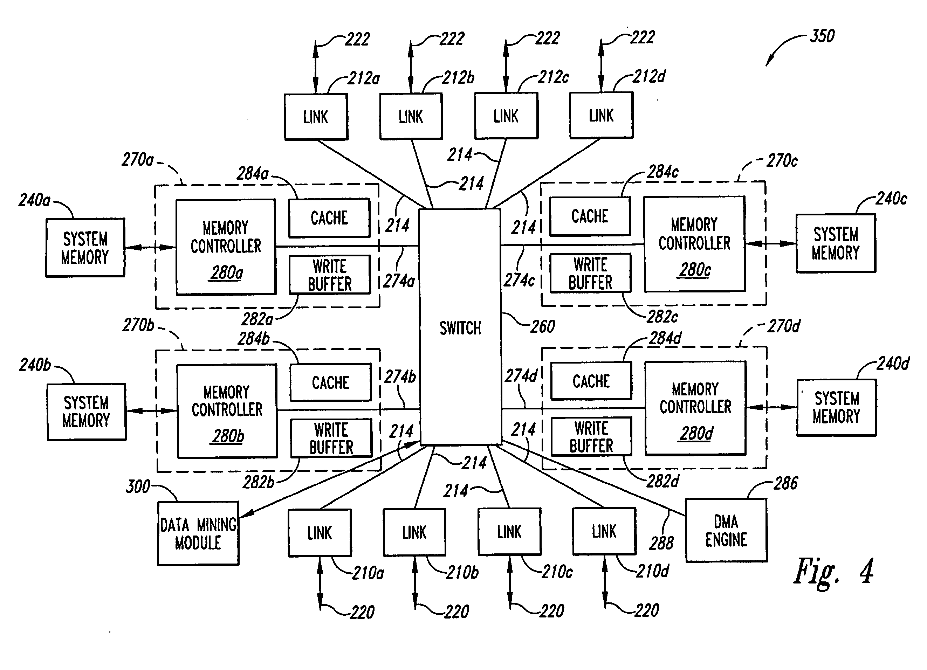

Another example of a memory hub 350 according to the present invention is shown in Figure 4. The memory hub 350 may also be used as the memory hub 140 in the computer system 100 of Figure 1. The memory hub 350 differs from the memory hub 200 shown in Figure 2 primarily by using a single data mining module 300 to service all of the memory devices 240a-d to which the memory hub 350 is coupled. Therefore, only one data mining module 300 is provided for the entire memory hub 350 rather than a data mining module 300 for each of the four memory interfaces 270a-d in the memory hub 200 of Figure 2. However, all of the other components of the memory hub 350 are identical to and operate in the same manner as corresponding components in the memory hub 200 of Figure 2. Therefore, in the interest of brevity, and explanation of their structure and operation will not be repeated.

The single data mining module 300 in the memory hub 350 is coupled to all of the link interfaces 210a-d and to all of the memory devices 240a-d through the switch 260. The data mining module 300 operates in the memory hub 350 in essentially the same manner that it operated in the memory hub 200. However, instead of allowing simultaneous searches of the memory device 240a-d, each of the memory devices 240a-d are separately searched in sequence.

## Claims

1. A memory hub (140; 200; 350) for use with a memory device, the memory hub comprising:
a link interface (210a-210d) for receiving memory requests;
a memory device interface (270a-270d) coupled to the link interface, the memory device interface outputting write memory requests and write data, the memory device interface further outputting read memory requests and receiving read data in response thereto; and
a data mining module (290a-290d; 300) coupled to the link interface, the data mining module being operable to receive at least one item of search data through the link interface, to repetitively cause read memory requests to be output from the memory hub, to receive read data responsive to each of the read memory requests and to compare the received read data to the at least one item of search data,
**characterized in that** the data mining module comprises,
a direct memory access engine (302) coupled to the link interface, the direct memory access engine being operable to generate the read memory requests;
a search data memory (314) coupled to the link interface to receive and store the at least one item of search data; and
a comparator (320a; 320b; 320c) for each item of search data stored in the search data memory, each comparator being coupled to receive a respective item of search data from the search data memory and being coupled to receive the read data, the comparator being operable to compare the read data to the respective item of search data and provide a hit indication in the event of a match.
wherein the search data memory stores a plurality of the search data items, and wherein the data mining module comprises a plurality of comparators (320a-320c) corresponding in number to the number of search data items stored in the search data memory.

2. The memory hub of claim 1, further comprising a plurality of link interfaces (210a-210d), a plurality of memory device interfaces (270a-270d), and a switch (260) for selectively coupling one of the plurality of link interfaces, and one of the plurality of memory device interfaces.

3. The memory hub of claim 1 wherein the data mining module is operable to generate the read memory requests and to output the read memory requests from the memory hub.

4. The memory hub of claim 1 wherein an output of the comparator is coupled to the link interface to couple the hit indication to the link interface.

5. The memory hub of claim 1 wherein the data mining module further comprises a memory device sequencer (306) coupled to the direct memory access engine, the memory device sequencer generating a set of command and address signals for each of the read requests.

6. The memory hub of claim 1 further comprising a results memory (330) coupled to an output of the comparator to store each of the hit indications generated by each of the comparators.

7. The memory hub of claim 6 wherein the results memory is operable to store a memory device address corresponding to the read data that resulted in each of the hit indications.

8. The memory hub of claim 7 wherein the results memory is further operable to store with each of the memory device addresses a corresponding item of search data.

9. The memory hub of claim 1 wherein the link interface, the memory device interface, and the data mining module are fabricated as an integrated circuit on a common semicondudor substrate.

10. A memory module (130a; 130b; 130n), comprising:
a plurality of memory devices (148: 240a-d); and
a memory hub according to one of claims 1 to 9.

11. The memory module of claim 10 wherein the memory hub further comprises a plurality of link interfaces, a plurality of memory device interfaces coupled to a respective memory device, and a switch for selectively coupling one of the plurality of link interfaces and one of the plurality of memory device interfaces.

12. The memory module of claim 11 wherein one of the data mining modules is provided for each of the memory device interfaces, each of the data mining modules being coupled to the memory device to which the respective memory device interface is coupled.

13. The memory module of claim 11 wherein the memory module includes a single data mining module that is coupled to each of the memory device interfaces through the switch.

14. The memory module of claim 10 wherein the data mining module further comprises a memory device sequencer coupled to the direct memory access engine and to the memory devices, the memory device sequencer generating a set of command and address signals for coupling to the memory devices for each of the read requests.

15. The memory module of claim 10 wherein the results memory is operable to store a memory device address indicative of a location in the memory devices where read data that resulted in each of the hit indications was stored.

16. The memory module of claim 15 wherein the results memory is further operable to store with each of the memory device addresses a corresponding item of search data that matched read data stored at the respective address.

17. The memory module of claim 10 wherein the plurality of memory devices comprises a plurality of synchronous random access memory devices.

18. The memory module of claim 10 wherein the link interface, the memory device interface, and the data mining module are fabricated as an integrated circuit on a common semiconductor substrate.

19. The memory module of claim 18 wherein the common semiconductor substrate further comprises the memory devices.

20. A processor-based system (100), comprising:
a processor (104) having a processor bus (106);
a system controller (110) coupled to the processor bus, the system controller having a system memory port and a peripheral device port;
at least one input device (118) coupled to the peripheral device port of the system controller;
at least one output device (120) coupled to the peripheral device port of the system controller;
at least one data storage device (124) coupled to the peripheral device port of the system controller; and
a memory module (130a; 130b; 130n) coupled to the system memory port of the system controller, the memory module comprising the features as claimed in one of claims 10 to 19.

21. A method of searching for items of search data stored in a memory device (148; 240a; 240b; 240c; 240d) that is located in a memory module (130a; 130b; 130n), the method comprising:
passing a plurality of search data to a memory hub (140; 200; 350) on the memory module, said memory hub being in accordance with claim 1,
storing the plurality of search data within the memory hub;
sequentially initiating a plurality of read memory requests in the memory hub;
sequentially coupling the read memory requests to the memory device;
receiving read data at the memory module responsive to each of the read memory requests:
comparing by using the plurality of comparators, the received read data to a respective one of the plurality of search data within the memory hub to determine if there is a data match;
generating a results indication responsive to each data match; and
coupling the results indication from the memory hub.

22. The method of claim 21 wherein the act of generating a results indication responsive to each data match comprises providing a memory device address indicative of a location in the memory devices where read data that resulted in each of the data matches was stored.

23. The method of claim 22 wherein the act of generating a results indication responsive to each data match further comprises providing with each memory device address a corresponding item of search data that was matched.

24. The method of claim 21, further comprising storing the results indication responsive to each data match prior to coupling the results indication from the memory hub.

## Patentansprüche

1. Speicher-Hub (140; 200; 350) zur Verwendung mit einer Speichereinrichtung, wobei der Speicher-Hub aufweist:
eine Verbindungsschnittstelle (210a-210d) zum Erhalten von Speicheranfragen;
eine mit der Verbindungsschnittstelle gekoppelte Speichereinrichtungsschnittstelle (270a-270d), wobei die Speichereinrichtungsschnittstelle Schreib-Speicheranfragen und Schreib-Daten ausgibt, wobei die Speichereinrichtungsschnittstelle weiterhin Lese-Speicheranfragen ausgibt und Lese-Daten als Antwort darauf erhält; und
ein mit der Verbindungsschnittstelle gekoppeltes Datenauswertungsmodul (290a-290d; 300), wobei das Datenauswertungsmodul betreibbar ist, mindestens ein Element von Such-Daten durch die Verbindungsschnittstelle zu erhalten, wiederholt zu veranlassen, dass Lese-Speicheranfragen von dem Speicher-Hub ausgegeben werden, und die erhaltenen Lese-Daten mit dem mindestens einen Element von Such-Daten zu vergleichen,
**dadurch gekennzeichnet, dass** das Datenauswertungsmodul aufweist:
eine mit der Verbindungsschnittstelle gekoppelte Maschine für direkten Speicherzugriff (302), wobei die Maschine für direkten Speicherzugriff betreibbar ist, die Lese-Speicheranfragen zu erzeugen;
einen mit der Verbindungsschnittstelle gekoppelten Such-Daten-Speicher (314) zum Erhalten und Speichern des mindestens einen Elements von Such-Daten; und
einen Vergleicher (320a; 320b; 320c) für jedes Element von in dem Such-Daten-Speicher gespeicherten Such-Daten, wobei jeder Vergleicher gekoppelt ist, jeweils ein Element von Such-Daten von dem Such-Daten-Speicher zu erhalten, und gekoppelt ist, die Lese-Daten zu erhalten, wobei der Vergleicher betreibbar ist, die Lese-Daten mit dem jeweiligen Element von Such-Daten zu vergleichen und eine Trefferanzeige in dem Fall einer Übereinstimmung zur Verfügung zu stellen,
wobei der Such-Daten-Speicher eine Mehrzahl von Such-Daten-Elementen speichert und wobei das Datenauswertungsmodul eine Mehrzahl von Vergleichern (320a-320c), aufweist, deren Anzahl der Anzahl der in dem Such-Daten-Speicher gespeicherten Such-Daten-Elemente entspricht.

2. Speicher-Hub nach Anspruch 1, weiterhin aufweisend eine Mehrzahl von Verbindungsschnittstellen (210a-210d), eine Mehrzahl von Speichereinrichtungsschnittstellen (270a-270d) und einen Schalter (260) zum selektiven Koppeln von einer der Mehrzahl von Verbindungsschnittstellen und einer der Mehrzahl von Speichereinrichtungsschnittstellen.

3. Speicher-Hub nach Anspruch 1, wobei das Datenauswertungsmodul betreibbar ist, Lese-Speicheranfragen zu erzeugen und die Lese-Speicheranfragen aus dem Speicher-Hub auszugeben.

4. Speicher-Hub nach Anspruch 1, wobei ein Ausgang des Vergleichers mit der Verbindungsschnittstelle gekoppelt ist, um die Trefferanzeige an die Verbindungsschnittstelle zu koppeln.

5. Speicher-Hub nach Anspruch 1, wobei das Datenauswertungsmodul weiterhin eine mit der Maschine für direkten Speicherzugriff gekoppelte Speichereinrichtung-Ablaufsteuerung (306) aufweist, wobei die Speichereinrichtung-Ablaufsteuerung einen Satz von Befehls- und Adress-Signalen für jede der Lese-Anfragen erzeugt.

6. Speicher-Hub nach Anspruch 1, weiterhin aufweisend einen mit einem Ausgang der Vergleichers gekoppelten Ergebnisspeicher (330), um jeweils die Trefferanzeigen zu speichern, die jeweils von den Vergleichern erzeugt werden.

7. Speicher-Hub nach Anspruch 6, wobei der Ergebnisspeicher betreibbar ist, eine Speichereinrichtungsadresse zu speichern, die mit den Lese-Daten korrespondiert, welche jeweils zu den Trefferanzeigen geführt haben.

8. Speicher-Hub nach Anspruch 7, wobei der Ergebnisspeicher weiterhin betreibbar ist, mit jeder der Speichereinrichtungsadressen ein korrespondierendes Element von Such-Daten zu speichern.

9. Speicher-Hub nach Anspruch 1, wobei die Verbindungsschnittstelle, die Speichereinrichtungsschnittstelle und das Datenauswertungsmodul als eine integrierte Schaltung auf einem gemeinsamen Halbleiter-Substrat hergestellt sind.

10. Speichermodul (130a; 130b; 130c), aufweisend:
eine Mehrzahl von Speichereinrichtungen (148; 240a-d); und
einen Speicher-Hub nach einem der Ansprüche 1 bis 9.

11. Speichermodul nach Anspruch 10, wobei der Speicher-Hub weiterhin eine Mehrzahl von Verbindungsschnittstellen, eine Mehrzahl von jeweils mit einer Speichereinrichtung gekoppelten Speichereinrichtungsschnittstellen (270a-270d) und einen Schalter (260) zum selektiven Koppeln von einer der Mehrzahl von Verbindungsschnittstellen und einer der Mehrzahl von Speichereinrichtungsschnittstellen aufweist.

12. Speichermodul nach Anspruch 11, wobei jeweils eines der Datenauswertungsmodule für jede der Speichereinrichtungsschnittstellen vorgesehen ist, wobei jedes der Datenauswertungsmodule mit der Speichereinrichtung gekoppelt ist, mit welcher die entsprechende Speichereinrichtungsschnittstelle gekoppelt ist.

13. Speichermodul nach Anspruch 11, wobei das Speichermodul ein einziges Datenauswertungsmodul enthält, das mit jeder der Speichereinrichtungsschnittstellen durch den Schalter gekoppelt ist.

14. Speichermodul nach Anspruch 10, wobei das Datenauswertungsmodul weiterhin eine mit der Maschine für direkten Speicherzugriff und den Speichereinrichtungen gekoppelte Speichereinrichtung-Ablaufsteuerung aufweist, wobei die Speichereinrichtung-Ablaufsteuerung einen Satz von Befehls- und Adress-Signalen zum Koppeln an die Speichereinrichtungen für jede der Lese-Anfragen erzeugt.

15. Speichermodul nach Anspruch 10, wobei der Ergebnisspeicher betreibbar ist, eine Speichereinrichtungsadresse zu speichern, die einen Ort in den Speichereinrichtungen bezeichnet, wo Lese-Daten gespeichert sind, die jeweils zu den Trefferanzeigen geführt haben.

16. Speichermodul nach Anspruch 15, wobei der Ergebnisspeicher weiterhin betreibbar ist, jeweils mit der Speichereinrichtungsadresse ein korrespondierendes Element von Such-Daten zu speichern, die mit den an der jeweiligen Adresse gespeicherten Lese-Daten übereingestimmt haben.

17. Speichermodul nach Anspruch 10, wobei die Mehrzahl von Speichereinrichtungen eine Mehrzahl von synchronen Direktzugriffspeichereinrichtungen ("synchronous random access memory devices") aufweist.

18. Speichermodul nach Anspruch 10, wobei die Verbindungsschnittstelle, die Speichereinrichtungsschnittstelle und das Datenauswertungsmodul als eine integrierte Schaltung auf einem gemeinsamen Halbleiter-Substrat hergestellt sind.

19. Speichermodul nach Anspruch 18, wobei das gemeinsame Halbleiter-Substrat weiterhin die Speichereinrichtungen aufweist.

20. Prozessor-basiertes System (100), aufweisend:
einen Prozessor (104) mit einem Prozessor-Bus (106);
einen mit dem Prozessor-Bus gekoppelten System-Controller (110), wobei der System-Controller einen Systemspeicheranschluss und einen Peripheriegerätanschluss hat;
mindestens eine mit dem Peripheriegeräteanschluss des System-Controllers gekoppelte Eingabeeinrichtung (118);
mindestens eine mit dem Peripheriegeräteänschluss des System-Controllers gekoppelte Ausgabeeinrichtung (120);
mindestens eine mit dem Peripheriegeräteanschluss des System-Controllers gekoppelte Datenspeichereinrichtung (120);
ein mit dem Systemspeicheranschluss des System-Controllers gekoppeltes Speichermodul (130a; 130b; 130n), wobei das Speichermodul die Merkmale, wie beansprucht in einem der Ansprüche 10 bis 19, aufweist.

21. Verfahren des Suchens nach Elementen von in einer Speichereinrichtung (148; 240a; 240b; 240c; 240d) gespeicherten Suchdaten, welche Speichereinrichtung in einem Speichermodul (130a; 130b; 130n) angeordnet ist, wobei das Verfahren aufweist:
Übergeben einer Mehrzahl von Such-Daten an einen Speicher-Hub (140; 200; 350) auf dem Speichermodul;
Speichern der Mehrzahl von Such-Daten in einem Such-Daten-Speicher innerhalb des Speicher-Hubs;
sequenzielles Initiieren einer Mehrzahl von Lese-Speicheranfragen, die von einer Maschine für direkten Speicherzugriff des Speicher-Hubs ausgeführt werden;
sequenzielles Koppeln der Lese-Speicheranfragen an die Speichereinrichtung;
Erhalten von Lese-Daten in dem Speicher-Hub als Antwort auf die jeweilige Lese-Speicheranfrage;
Vergleichen, unter Verwendung eines entsprechenden Vergleichers einer Mehrzahl von Vergleichern, der erhaltenen Lese-Daten mit einem entsprechenden der in dem Such-Daten-Speicher innerhalb des Speicher-Hubs gespeicherten Mehrzahl von Such-Daten, um zu bestimmen, ob es eine Datenübereinstimmung gibt, wobei die Anzahl der Mehrzahl von Vergleichern mit der Anzahl von in dem Such-Daten-Speicher gespeicherten Such-Elementen entspricht;
Erzeugen einer Ergebnisanzeige als Antwort auf die jeweilige Datenübereinstimmung; und
Koppeln der Ergebnisanzeige aus dem Speicher-Hub.

22. Verfahren nach Anspruch 21, wobei der Vorgang des Erzeugens einer Ergebnisanzeige als Antwort auf die jeweilige Datenübereinstimmung das Bereitstellen einer Speichereinrichtungsadresse aufweist, die einen Ort in den Speichereinrichtungen bezeichnet, wo Lese-Daten gespeichert sind, die zu der jeweiligen Daten-übereinstimmungen geführt haben.

23. Verfahren nach Anspruch 22, wobei der Vorgang des Erzeugens einer Ergebnisanzeige als Antwort auf die jeweilige Datenübereinstimmung weiterhin das Bereitstellen eines korrespondierenden Elements von Such-Daten, mit denen es Übereinstimmung gab, mit der jeweiligen Speichereinrichtungsadresse aufweist.

24. Verfahren nach Anspruch 21, weiterhin aufweisend Speichern der Ergebnisanzeige als Antwort auf die jeweilige Datenübereinstimmung vor dem Koppeln der Ergebnisanzeige aus dem Speicher-Hub.

## Revendications

1. Concentrateur à mémoire (140 ; 200 ; 350) à utiliser avec un dispositif de stockage, le concentrateur à mémoire comprenant :
une interface de liaison (210a-210d) pour recevoir des requêtes mémoires ;
une interface de dispositif de stockage (270a-270d) couplée à l'interface de liaison, l'interface de dispositif de stockage émettant des requêtes mémoires en écriture et des données d'écriture, l'interface de dispositif de stockage émettant en outre des requêtes mémoires en lecture et recevant des données de lecture en réponse auxdites requêtes ; et
un module d'exploration de données (290a-290d ; 300) couplé à l'interface de liaison, le module d'exploration de données pouvant être activé pour recevoir au moins une unité d'information de données de recherche via l'interface de liaison, pour obtenir une émission répétée de requêtes mémoires en lecture à partir du concentrateur à mémoire, pour recevoir des données de lecture en réponse à chacune des requêtes mémoires en lecture et pour comparer les données de lecture reçues à ladite au moins une unité d'information de données de recherche ;
**caractérisé en ce que** le module d'exploration de données comprend :
un moteur d'accès direct à la mémoire (302) couplé à l'interface de liaison, le moteur d'accès direct à la mémoire pouvant être activé pour générer les requêtes mémoires en lecture ;
une mémoire de données de recherche (314) couplée à l'interface de liaison pour recevoir et pour stocker ladite au moins une unité d'information de données de recherche ; et
un comparateur (320a ; 320b ; 320c) pour chaque unité d'information de données de recherche stockées dans la mémoire de données de recherche, chaque comparateur étant couplé pour recevoir une unité d'information respective de données de recherche à partir de la mémoire de données de recherche et étant couplé pour recevoir les données de lecture, le comparateur pouvant être activé pour comparer les données de lecture à l'unité d'information respective de données de recherche et pour procurer une indication de réponse pertinente dans le cas d'une correspondance ;
dans lequel la mémoire de données de recherche stocke plusieurs unité d'informations de données de recherche et dans lequel le module d'exploration de données comprend plusieurs comparateurs (320a-320c) dont le nombre correspond au nombre d'unités d'informations de données de recherche stockées dans la mémoire de données de recherche.

2. Concentrateur à mémoire selon la revendication 1, comprenant en outre plusieurs interfaces de liaison (210a-210d), plusieurs interfaces de dispositif de stockage (270a-270d) et un commutateur (260) pour le couplage sélectif d'une desdites plusieurs interfaces de liaison et d'une desdites plusieurs interfaces de dispositif de stockage.

3. Concentrateur à mémoire selon la revendication 1, dans lequel le module d'exploration de données peut être activé pour générer les requêtes mémoires en lecture et pour émettre les requêtes mémoires en lecture à partir du concentrateur à mémoire.

4. Concentrateur à mémoire selon la revendication 1, dans lequel une sortie du comparateur est couplée à l'interface de liaison pour coupler l'indication de réponse pertinente à l'interface de liaison.

5. Concentrateur à mémoire selon la revendication 1, dans lequel le module d'exploration de données comprend en outre un séquenceur de dispositif de stockage 306 couplé aux moteurs d'accès direct à la mémoire, le séquenceur de dispositif de stockage générant une série de signaux de commande et d'adresse pour chacune des requêtes en lecture.

6. Concentrateur à mémoire selon la revendication 1, comprenant en outre une mémoire de résultats (330) couplée à une sortie du comparateur pour stocker chacune des indications de réponse pertinente générées par chacun des comparateurs.

7. Concentrateur à mémoire selon la revendication 6, dans lequel la mémoire de résultats peut être activée pour stocker une adresse de dispositif de stockage correspondant aux données de lecture dont résulte chacune des indications de réponse pertinente.

8. Concentrateur à mémoire selon la revendication 7, dans lequel la mémoire de résultat peut être en outre activée pour stocker, avec chacune des adresses de dispositif de stockage, une unité d'information correspondante de données de recherche.

9. Concentrateur à mémoire selon la revendication 1, dans lequel l'interface de liaison, l'interface de dispositif de stockage et le module d'exploration de données sont réalisés sous la forme d'un circuit intégré sur un substrat semi-conducteur commun.

10. Module de stockage (130a ; 130b ; 130n) comprenant :
plusieurs dispositifs de stockage (148 ; 240a-d) ; et
un concentrateur à mémoire selon l'une quelconque des revendications 1 à 9.

11. Module de stockage selon la revendication 10, dans lequel le concentrateur à mémoire comprend en outre plusieurs interfaces de liaison, plusieurs interfaces de dispositifs de stockage couplées à un dispositif de stockage respectif et un commutateur pour le couplage sélectif d'une desdites plusieurs interfaces de liaison et d'une desdites plusieurs interfaces de dispositif de stockage.

12. Module de stockage selon la revendication 11, dans lequel un des modules d'exploration de données est prévu pour chacune des interfaces de dispositif de stockage, chacun des modules d'exploration de données étant couplé au dispositif de stockage auquel est couplée l'interface respective de dispositif de stockage.

13. Module de stockage selon la revendication 11, dans lequel le module de stockage englobe un module unique d'exploration de données qui est couplé à chacune des interfaces de dispositif de stockage via le commutateur.

14. Module de stockage selon la revendication 10, dans lequel le module d'exploration de données comprend en outre un séquenceur de dispositif de stockage couplé au moteur d'accès direct à la mémoire et aux dispositifs de stockage, le séquenceur de dispositif de stockage générant une série de signaux de commande et d'adresse à des fins de couplage aux dispositifs de stockage pour chacune des requêtes en lecture.

15. Module de stockage selon la revendication 10, dans lequel la mémoire de résultats peut être activée pour stocker une adresse de dispositif de stockage indiquant un endroit dans les dispositifs de stockage dans lequel sont stockées des données de lecture dont résulte chacune des indications de réponse pertinente.

16. Module de stockage selon la revendication 15, dans lequel la mémoire de résultats peut en outre être activée pour stocker, avec chacune des adresses de dispositif de stockage, une unité d'information correspondante de données de recherche qui correspond à des données de lecture stockées à l'adresse respective.

17. Module de stockage selon la revendication 10, dans lequel lesdits plusieurs dispositifs de stockage comprennent plusieurs dispositifs à mémoire vive dynamique synchrone.

18. Module de stockage selon la revendication 10, dans lequel l'interface de liaison, l'interface de dispositif de stockage et le module d'exploration de données sont réalisés sous la forme d'un circuit intégré sur un substrat semi-conducteur commun.

19. Module de stockage selon la revendication 18, dans lequel le substrat semi-conducteur commun comprend en outre les dispositifs de stockage.

20. Système (100) basé sur un processeur comprenant :
un processeur (104) possédant un bus interne (106) ;
un contrôleur de système (110) couplé au bus interne, le contrôleur de système possédant un port de la mémoire système et un port de périphérique ;
au moins un dispositif d'entrée (118) couplé au port de périphérique du contrôleur de système ;
au moins un dispositif de sortie (120) couplé au port de périphérique du contrôleur de système ;
au moins un dispositif de stockage de données (124) couplé au port de périphérique du contrôleur de système ; et
un module de stockage (130a ; 130b ; 130n) couplé au port de la mémoire système du contrôleur de système, le module de stockage comprenant les caractéristiques telles que revendiquées dans l'une quelconque des revendications 10 à 19.

21. Procédé de recherche d'unités d'informations de données de recherche stockées dans un dispositif de stockage (148 ; 240a ; 240b ; 240c ; 240d) qui est monté dans un module de stockage (130a ; 130b ; 130n), le procédé comprenant le fait de :
faire passer plusieurs données de recherche à un concentrateur à mémoire (140 ; 200 ; 350) sur le module de stockage ;
stocker lesdites plusieurs données de recherche dans une mémoire de données de recherche au sein du concentrateur à mémoire ;
émettre de manière séquentielle plusieurs requêtes mémoires en lecture qui sont formulées par un moteur d'accès direct à la mémoire dudit concentrateur à mémoire ;
coupler de manière séquentielle les requêtes mémoires en lecture au dispositif de stockage ;
recevoir des données de lecture au concentrateur à mémoire en réponse à chacune des requêtes mémoires en lecture ;
comparer, en utilisant un comparateur respectif parmi plusieurs comparateurs, les données de lecture reçues à une donnée de recherche respective parmi plusieurs données de recherche stockées dans ladite mémoire de données de recherche au sein du concentrateur à mémoire afin de déterminer la présence ou non d'une correspondance de données, le nombre desdits plusieurs comparateurs correspondant au nombre des unités d'informations de recherche stockées dans la mémoire de données de recherche ;
générer une indication de résultat en réponse à chacune des correspondances de données ; et
coupler les indications de résultats fournies par le concentrateur à mémoire.

22. Procédé selon la revendication 21, dans lequel le fait de générer une indication de résultat en réponse à chaque correspondance de données comprend le fait de procurer une adresse de dispositif de stockage indiquant un endroit dans les dispositifs de stockage dans lequel sont stockées des données de lecture dont résulte chacune des correspondances de données.

23. Procédé selon la revendication 22, dans lequel le fait de générer une indication de résultat en réponse à chaque correspondance de données comprend en outre le fait de procurer, avec chaque adresse de dispositif de stockage, une unité d'information correspondante de données de recherche ayant fait l'objet d'une correspondance.

24. Procédé selon la revendication 21, comprenant en outre le fait de stocker les indications de résultats en réponse à chaque correspondance de données avant de coupler les indications de résultats émises par le concentrateur à mémoire.
